# FASCICULE DE BREVET EUROPEEN

(11) **EP 0 811 456 B1**
(45) Date de publication et mention de la délivrance du brevet: **16.10.2002**
(21) Numéro de dépôt: 97470016.3
(22) Date de dépôt: 04.06.1997
(51) Int. Cl.: B23Q 1/54

(54) **Procédé d'usinage de pièces mécaniques, particulièrement de pièces de forme complexe**
Verfahren zur Bearbeitung von Werkstücken, insbesondere Werkstücke mit einer complexen Form
Method for machining workpieces, in particular pieces with a complex form

(30) Priorité: 06.06.1996 FR 9607183
(43) Date de publication de la demande: 10.12.1997
(73) Titulaire: Constructions Mécaniques des Vosges, 88320 Rozières sur Mouzon (FR)
(72) Inventeur: Wildenberg, François, 88140 Contrexeville (FR)
(74) Mandataire: Poupon, Michel

(56) Documents cités:
- EP-A- 0 459 251
- WO-A-92/17313
- US-A- 4 791 583

## Description

La présente invention concerne un procédé pour l'usinage de pièces mécaniques, particulièrement mais non limitativement pour le fraisage des pièces de forme complexe.

On connait déjà de multiples dispositifs d'usinage destinés à l'industrie. Par exemple, le fraisage s'effectue traditionnellement sur une fraiseuse, par déplacement, sous une fraise tournant à vitesse convenable de la pièce à usiner.

On distingue notamment le fraisage en bout dans lequel la surface à usiner est perpendiculaire à l'aire de la fraise et le fraisage en roulant dans lequel la surface à usiner est parallèle à cet axe.

L'inconvénient de ces dispositifs sont les difficultés que l'on rencontre pour l'usinage des pièces de forme complexe qui obligent à l'utilisation de moyens informatiques puissants.

Le problème à résoudre consiste à concevoir un procédé d'usinage simple permettant d'usiner des pièces mécaniques même si celles-ci ont des formes complexes.
1. Conformément à l'invention la demanderesse propose à cette fin un procédé pour l'usinage des pièces mécaniques, en particulier mais non limitativement pour le fraisage des pièces mécaniques de forme complexe,
   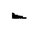 caractérisé d'une part, en ce qu'il comporte les étapes suivantes :
      - détermination du volume de la pièce à usiner (6),
      - définition d'au moins une maille d'usinage, afin de réaliser un découpage du volume de la pièce à usiner par un ensemble de sous volume ou mailles,
      - maillage du volume de la pièce à usiner par projection en volumique de ce découpage sur la pièce à usiner,
      - programmation de l'usinage de la ou des mailles d'usinage telle que définies précédemment,
      - usinage maille par maille de la pièce à usiner (6) selon la programmation prédéfinie
   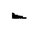 caractérisé d'autre part en ce qu'il est mis en oeuvre avec une machine du type présentant un support outil capable de se déplacer relativement à la pièce à usiner et portant une tête d'usinage mobile,
   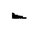 et caractérisé enfin en ce que l'usinage maille par maille consiste en :
      ■ positionnement et immobilisation du support outil de la tête d'usinage en face d'un point prédéterminé d'une première maille à usiner telle que définie par la programmation,
      ■ usinage de ladite maille par la tête d'usinage mobile, le support outil restant fixe,
      ■ puis, positionnement et immobilisation du support outil en face d'un point prédéterminé de la maille suivante à usiner,
      ■ usinage de ladite maille suivante par la tête d'usinage mobile, le support restant fixe,
      ■ et ainsi de suite pour l'ensemble de la pièce.

L'art antérieur comprend le document WO 92 17313 A (GEODETIC MACHINES LTD) qui décrit un système de conception et de fabrication assisté par ordinateur où l'usinage contrôlé par ordinateur d'un bloc de matériau est basé sur la décomposition du volume dudit bloc en un arrangement 3-D régulier de cellules cuboïdes dont la taille est en relation avec les dimensions des outils d'usinage.

En particulier, D1 décrit un procédé pour l'usinage des pièces mécaniques, en particulier pour le fraisage des pièces mécaniques de forme complexe, caractérisé en ce qu'il comporte les étapes suivantes :
- détermination du volume de la pièce à usiner,
- définition d'une maille d'usinage,
- maillage du volume de la pièce à usiner avec la maille d'usinage telle que précédemment définie,
- programmation de l'usinage de la maille d'usinage,
- usinage maille par maille de la pièce à usiner.

L'usinage du bloc s'effectue d'abord par une étape de dégrossissage puis par une étape de finition dudit bloc.

Or, dans le procédé objet de la présente demande l'usinage de la pièce s'effectue sans dégrossissage préalable.

Dans une variante du procédé suivant l'invention, on détermine le volume de la pièce à usiner par le volume des points pilotés.

De manière préférentielle, les procédés suivant l'invention seront mis en oeuvre par une tête de fraisage hexapode.

On comprendra mieux l'invention à l'aide de la description donnée à titre d'exemple non limitatif, en référence aux dessins annexés dans lesquels :
- la **figure 1** est une illustration d'un usinage en cinq axes simultanés,
- la **figure 2** est une illustration d'un usinage en plans parallèles,
- la **figure 3** est une illustration d'un volume de travail d'un hexapode,
- la **figure 4** est un exemple de maillage suivant l'invention,
- la **figure 5** est un exemple d'un volume usiné par points pilotés.

L'hexapode se compose par définition de six jambes (1) dont la longueur varie par l'intermédiaire d'un moteur piloté fixé à chaque jambe.

Chaque jambe est munie à chacune de ses deux extrémités d'une articulation.

Les six extrémités des six articulations des six jambes sont fixées rigidement à un plan. De même, les six autres extrémités sont fixées rigidement à un autre plan.

Un des plans, que l'on appelle plateau fixe (3), est fixé rigidement à un support outil (4). L'autre reste mobile, c'est le plateau mobile (2).

Un outil spécifique d'usinage, par exemple une broche de fraisage grande vitesse, est adapté sur le plateau mobile.

En pilotant simultanément les six moteurs des six jambes, on peut obtenir des mouvements de translation, d'inclinaison, d'extension.

On obtient ainsi une tête de fraisage hexapode.

Suivant un premier procédé de mise en oeuvre de l'invention, on détermine le volume de la pièce à usiner.

Pour ce, on peut envisager de déterminer le volume à usiner de façon manuelle par un opérateur ou par des moyens spécifiques de mesure que l'on ne décrira pas ici.

On définit ensuite une maille d'usinage.

Ladite maille pourra être un petit volume ou un grand volume de forme simple tel qu'un parallélépipède ou de formes très complexes tel que le volume maximal que peut théoriquement parcourir la tête d'usinage.

On peut ainsi occuper complètement un volume ou la pièce à usiner (6) par un ensemble de "sous-volumes".

On projette en volumique ce maillage sur la pièce à usiner. On obtient ainsi le découpage de la pièce en carreaux. C'est ce que l'on appelle le maillage du volume de la pièce à usiner.

Ces petits volumes pourront être soient tous identiques, soient de types différents.

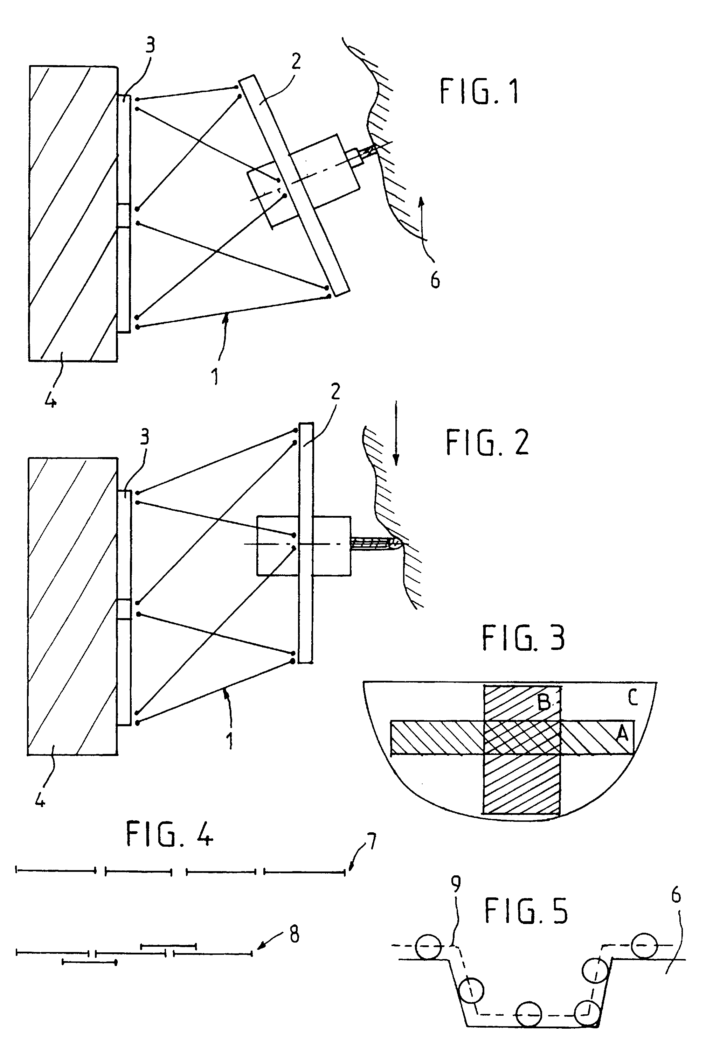

Par exemple, la figure 3 illustre l'utilisation de trois volumes (A, B et C).

Le volume à usiner peut alors être couvert :
- soit par des mailles de type A (parallélépipédique à grande largeur),
- soit par des mailles de type B (parallélépipédique à grande longueur),
- soit par des mailles de type C (représentation schématique d'un volume maximal que pourrait couvrir une tête de fraisage hexapode),
- soit par une combinaison des trois types de mailles.

Ces volumes peuvent être juxtaposés (7), légèrement superposés parallèlement juxtaposés et superposés (8) comme illustré à la figure 4.

De plus, ces volumes peuvent ne pas déborder ou déborder parallèlement déborder et ne pas déborder du volume de la pièce à usiner.

On positionne et on immobilise le support en face d'un point prédéterminé de la maille ou du centre de la première maille. Puis on effectue l'usinage à très grande vitesse, par exemple en cinq axes simultanés de cette maille. Le support est immobile pendant cette phase.

Seule la tête d'usinage par l'intermédiaire du plateau mobile bouge pour effectuer l'usinage de la maille.

On déplace le support outil, on le positionne et on l'immobilise en face d'un point prédéterminé de la maille ou du centre de la maille suivante et on recommence l'usinage. On procède ainsi pour l'ensemble de la pièce.

Le point de positionnement est prédéterminé suivant les besoins du travail d'usinage à effectuer.

L'usinage est piloté par des moyens informatiques.

Dans une variante du procédé selon l'invention, on définit la surface au volume des points pilotés (9) à savoir le volume parcouru par l'outil (voir figure 5).

Suivant la nécessité du fraisage, on pourra utiliser un outil à bout sphérique ou un outil torique.

La présente invention permet grâce à une grande flexibilité d'utilisation, notamment des usinages cinq axes simultanés à vitesse habituelle, des usinages deux ou trois axes simultanés à grande vitesse et des usinages cinq axes simultanés à grande vitesse.

L'application de l'invention n'est pas limitée au fraisage, on peut l'appliquer à tous les types d'usinage.

L'invention est d'autre part intéressante car elle peut être réalisée avec des outils existants.

## Revendications

1. Procédé pour l'usinage des pièces mécaniques, en particulier pour le fraisage des pièces mécaniques de forme complexe,
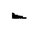 comportant les étapes suivantes :
- détermination du volume de la pièce à usiner (6),
- définition d'au moins une maille d'usinage, afin de réaliser un découpage du volume de la pièce à usiner par un ensemble de sous volume ou mailles,
- maillage du volume de la pièce à usiner par projection en volumique de ce découpage sur la pièce à usiner,
- programmation de l'usinage de la ou des mailles d'usinage telle que définies précédemment,
- usinage maille par maille de la pièce à usiner (6) selon la programmation prédéfinie
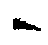 ledit procédé étant mis en oeuvre avec une machine du type présentant un support outil capable de se déplacer relativement à la pièce à usiner et portant une tête d'usinage mobile,
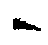 l'usinage maille par maille consistant en :
■ positionnement et immobilisation du support outil de la tête d'usinage en face d'un point prédéterminé d'une première maille à usiner telle que définie par la programmation,
■ usinage de ladite maille par la tête d'usinage mobile, le support outil restant fixe,
■ puis, positionnement et immobilisation du support outil en face d'un point prédéterminé de la maille suivante à usiner,
■ usinage de ladite maille suivante par la tête d'usinage mobile, le support restant fixe,
■ et ainsi de suite pour l'ensemble de la pièce.

2. Procédé d'usinage selon la revendication 1, **caractérisé en ce que** le point prédéterminé de chaque maille à usiner est au centre de ladite maille à usiner.

3. Procédé d'usinage selon l'une des revendications 1 à 2, **caractérisé en ce que** la détermination du volume de la pièce est réalisée par le volume des points pilotés (9).

## Claims

1. Method of machining mechanical parts, in particular for milling mechanical parts of complex form, comprising the following steps:
- determining the volume of the part to be machined (6),
- defining at least one machining lattice, in order to achieve a cutting-up of the volume of the part to be machined by a group of areas of reduced volume or lattices,
- forming a lattice from the volume of the part to be machined by projecting by volume this cutting-up onto the part to be machined,
- programming the machining of the machining lattice or lattices as previously defined,
- machining the part to be machined (6) lattice-by-lattice in accordance with the predefined programming,
- said method being accomplished with a machine of the type having a tool carrier, which is capable of being displaced relative to the part to be machined, and which carries a displaceable machining head,
- the lattice-by-lattice machining comprising:
- positioning and immobilising the tool carrier of the machining head opposite a predetermined point of a first lattice to be machined, such as is defined by the programming,
- machining said lattice by the displaceable machining head, the tool carrier remaining stationary,
- then positioning and immobilising the tool carrier opposite a predetermined point of the following lattice to be machined,
- machining said following lattice by the displaceable machining head, the carrier remaining stationary,
- and so on for the whole of the part.

2. Machining method according to claim 1, **characterised in that** the predetermined point of each lattice to be machined is in the centre of said lattice to be machined.

3. Machining method according to one of claims 1 to 2, **characterised in that** the determination of the volume of the part is achieved by the volume of the points (9) used for guidance.

## Patentansprüche

1. Verfahren zum Bearbeiten von Werkstücken, insbesondere zum Fräsen von Werkstücken mit komplexer Form, welches die folgenden Schritte aufweist:
- Bestimmen des Volumens des zu bearbeitenden Werkstückes (6),
- Festlegung zumindest eines Bearbeitungsfeldes, um einen Abschnitt des Volumens des zu bearbeitenden Werkstückes durch eine Gruppe von Untervolumina oder Feldern festzulegen,
- Aufnehmen des Volumens des zu bearbeitenden Werkstückes in ein Gitter durch volumetrische Projektion des Abschnittes auf das zu bearbeitende Werkstück,
- Programmieren der Bearbeitung für das Bearbeitungsfeld oder die Bearbeitungsfelder, wie es bzw. sie zuvor festgelegt wurden,
- Bearbeiten von Feld zu Feld des zu bearbeitenden Werkstückes (6) gemäß der festgelegten Programmierung,
- wobei das vorgenannte Verfahren mit einer Maschine ausgeführt wird, die einen Werkzeugsupport hat, der sich relativ zu dem zu bearbeitenden Werkstück zu verschieben vermag und einen beweglichen Bearbeitungskopf trägt und
- die Bearbeitung von Feld zu Feld in Folgendem besteht:
- Positionieren und Feststellen des Werkzeugsupports des Bearbeitungskopfes gegenüber einem zuvor bestimmten Punkt eines ersten zu bearbeitenden Feldes, welches durch die Programmierung definiert ist,
- Bearbeiten des genannten Feldes durch den beweglichen Bearbeitungskopf, wobei der Werkzeugsupport festgestellt bleibt,
- dann Positionieren und Feststellen des Werkzeugsupports gegenüber einem zuvor bestimmten Punkt eines nachfolgenden, zu bearbeitenden Feldes,
- Bearbeiten des genannten, nachfolgenden Feldes durch den beweglichen Bearbeitungskopf, wobei der Support festgestellt bleibt,
- und Fortfahren im gleichen Sinne für das ganze Werkstück.

2. Bearbeitungsverfahren nach Anspruch 1, **dadurch gekennzeichnet, dass** der vorherbestimmte Punkt jedes zu bearbeitenden Feldes sich im Zentrum des genannten zu bearbeitenden Feldes befindet.

3. Bearbeitungsverfahren nach einem der Ansprüche 1 bis 2, **dadurch gekennzeichnet, dass** die Bestimmung des Volumens des Werkstückes durch das Volumen der angesteuerten Punkte (9) erfolgt.
